(19) Europäisches Patentamt
European Patent Office
Office européen des brevets

(11) EP 0 572 651 B1

# (12) FASCICULE DE BREVET EUROPEEN

(45) Date de publication et mention de la délivrance du brevet:
**21.08.1996 Bulletin 1996/34**

(21) Numéro de dépôt: **93902371.9**

(22) Date de dépôt: **23.12.1992**

(51) Int Cl.[6]: **C07C 219/08**, C08F 220/36, C08F 212/08

(86) Numéro de dépôt international:
**PCT/FR92/01229**

(87) Numéro de publication internationale:
**WO 93/13050 (08.07.1993 Gazette 1993/16)**

## (54) MONOMERES MULTIACRYLIQUES AZOTES, LEUR PREPARATION ET LEUR APPLICATION A L'OBTENTION DE NOUVEAUX POLYMERES

STICKSTOFF ENTHALTENDE MULTIACRYLIC MONOMERE, IHRE HERSTELLUNG UND IHRE ANWENDUNG ZUM HERSTELLEN VON POLYMEREN

NITROGENOUS MULTIACRYLIC MONOMERS, PREPARATION AND APPLICATION THEREOF IN PRODUCING NOVEL POLYMERS

(84) Etats contractants désignés:
**AT BE CH DE ES GB IT LI NL**

(30) Priorité: **24.12.1991 FR 9116125**

(43) Date de publication de la demande:
**08.12.1993 Bulletin 1993/49**

(73) Titulaire: **CRAY VALLEY SA**
**F-92800 Puteaux (FR)**

(72) Inventeurs:
- **PASCAULT, Jean-Pierre**
  **F-69100 Villeurbanne (FR)**
- **ROLLY, Florence**
  **F-69800 Saint-Priest (FR)**
- **TAHA, Mohamed**
  **F-34830 Clapiers (FR)**
- **TITIER, Christelle**
  **F-63360 Saint-Beauzire (FR)**

(74) Mandataire: **Chaillot, Geneviève**
**Cabinet CHAILLOT,**
**16-20, avenue de L'Agent Sarre,**
**B.P. 74**
**92703 Colombes Cédex (FR)**

(56) Documents cités:
**EP-A- 0 044 816**
**WO-A-86/06716**
**FR-A- 2 141 897**

- **PATENT ABSTRACTS OF JAPAN vol. 12, no. 103 (C-485)(2950) 5 Avril 1988**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 572 651 B1

## Description

La présente invention se rapporte à de nouveaux monomères multiacryliques azotés, un procédé pour leur préparation et leur application à la synthèse de nouveaux polymères.

On connaît déjà par le brevet WO 86/06716 des monomères de formule

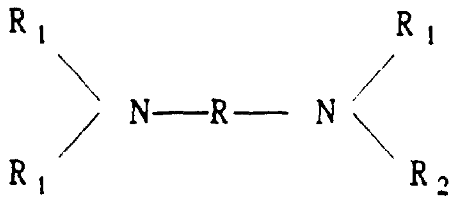

(A)

où:

- $R^1$ est un groupement acrylique ou méthacrylique répondant à la formule

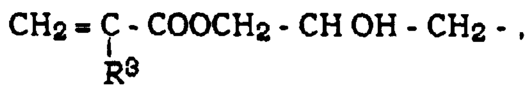

  $R^3$ étant choisi parmi l'hydrogène et le radical méthyle ;
- $R^2$ représente un atome d'hydrogène, un enchaînement aliphatique saturé pouvant comporter jusqu'à 10 atomes de carbone,ou bien un groupement identique à $R^1$ ; et
- R est un groupement divalent comprenant au moins un cycle aliphatique ou aromatique substitué ou non

Ces monomères conduisent par polymérisation ou copolymérisation radicalaire à des polymères présentant des propriétés thermiques nettement meilleures que ceux obtenus à partir de monomères acryliques classiquement utilisés. Toutefois, la demanderesse a mis en évidence que ces polymères présentent l'inconvénient d'une grande fragilité et d'un caractère cassant probablement dus à leur trop grande densité de réticulation D'autre part, la synthèse des monomères (A) met en jeu un acrylate ou méthacrylate de glycidyle dont la réactivité avec une diamine de formule $H_2N - R - NH_2$ s'avère insuffisante dans les conditions décrites par ce document

Un objectif de la présente invention consiste donc à mettre au point des polymères qui, tout en conservant les bonnes propriétés thermiques des polymères décrits par le brevet WO 86/06716, possèdent également de bonnes propriétés mécaniques, en particulier l'absence de fragilité et de caractère cassant, et puissent être obtenus à partir d'époxydes ayant une réactivité élevée vis-à-vis des diamines de formule $H_2N - R - NH_2$.

De manière surprenante cet objectif a pu être atteint par la mise au point de nouveaux monomères multiacryliques azotés qui constituent un premier objet de la présente invention. Cette classe de nouveaux monomères peut être représentée par la formule (I) ci-après,

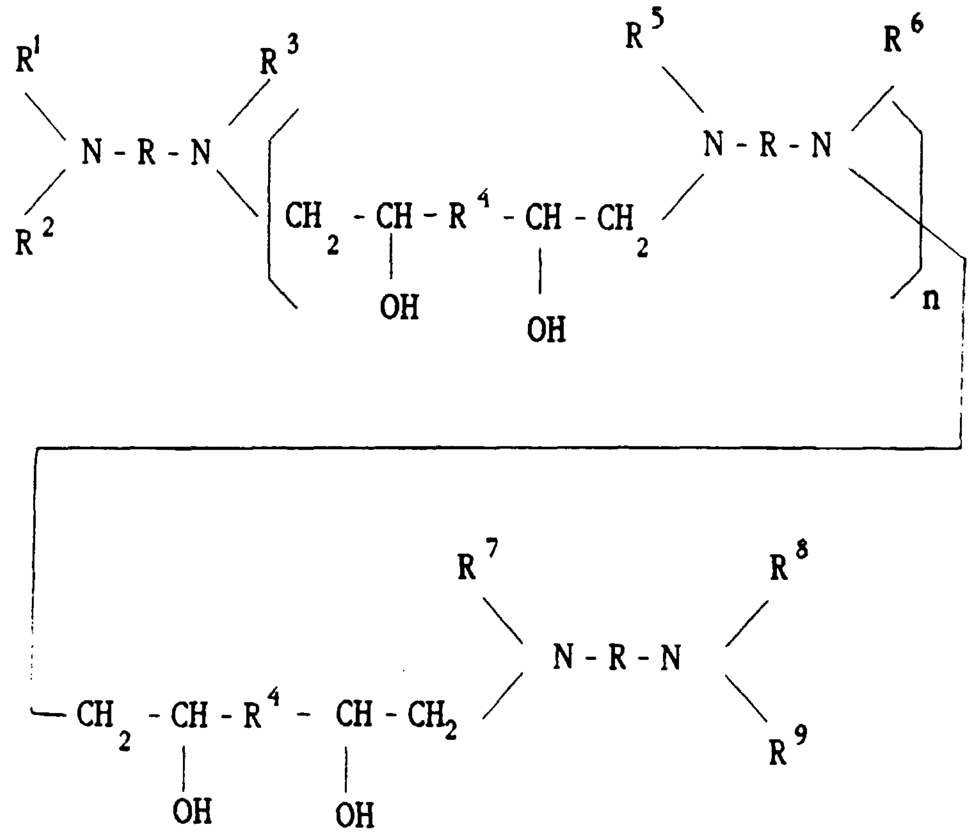

(I)

dans laquelle:

- n est un nombre entier au moins égal à 0,
- $R^1$, $R^2$, $R^3$, $R^5$, $R^6$, $R^7$, $R^8$ et $R^9$ sont chacun choisis indépendamment parmi l'atome d'hydrogène et les groupements acryliques ou méthacryliques de formule

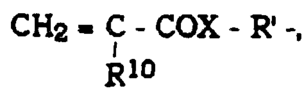

  $R^{10}$ étant choisi parmi l'atome d'hydrogène et le radical méthyle, X étant choisi parmi les atomes de soufre et d'oxygène et R' étant une chaine hydrocarbonée de 2 à 20 atomes de carbone comprenant un groupe hydroxyle dans la chaine ou en bout de chaine, choisie parmi les chaînes alkyles linéaires ou ramifiées, cycloakyles ou hétérocycloalkyles mono- ou polycycliques et alkylaryles,
- $R^4$ est un groupement de formule $- CH_2 - O - R^{11} - O - CH_2 -$ dans laquelle $R^{11}$ est un groupement divalent choisi par mi les groupements alkylène ayant de 2 à 12 atomes de carbone et ceux comprenant au moins un cycle aliphatique ou aromatique substitué ou non, et
- R est un groupement divalent comprenant au moins un cycle aliphatique ou aromatique substitué ou non,

avec la condition que :

- lorsque n est égal à 0, au moins deux des groupements $R^1$, $R^2$, $R^3$, $R^7$, $R^8$ et $R^9$ sont des groupements acryliques ou méthacryliques, et
- lorsque n est plus grand que 0, au moins deux des groupements $R^1$, $R^2$, $R^3$, $R^5$, $R^6$, $R^7$, $R^8$ et $R^9$ sont des groupements acryliques ou métacryliques.

Le groupement R et le groupement $R^{11}$, lorsque ce dernier n'est pas un groupement alkylène, peuvent contenir deux cycles aliphatiques ou aromatiques articulés et être de la forme $R^{12} - R^{13} - R^{12}$ où $R^{12}$ représente un radical cyclique ou aromatique comprenant de préférence 5 à 10 atomes de carbone substitués ou non par des groupements aliphatiques ou des hétéroatomes, tel que par exemple :

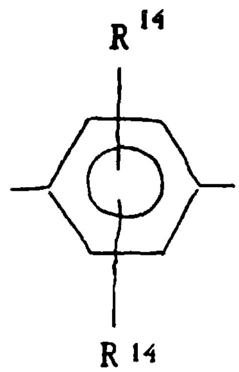 ou 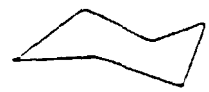

où $R^{14}$ représente un atome d'hydrogène, d'halogène, un radical méthyle, éthyle ou isopropyle , et où $R^{13}$ représente un radical qui peut étre, soit un simple atome (tel l'oxygène), soit un groupe d'atomes comportant des atomes de carbone, d'hydrogène, d'oxygène et/ou de soufre, permettant de relier les cycles décrits pour $R^{12}$ par des motifs alkylénes tels que méthylènes ou éthylène ou des liaisons éthers ou sulfones.

Le groupement R et le groupement $R^{11}$, lorsque ce dernier n'est pas un groupement alkylène, peuvent contenir un seul cycle aliphatique ou aromatique substitué ou non, tel que par exemple:

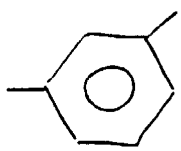 , 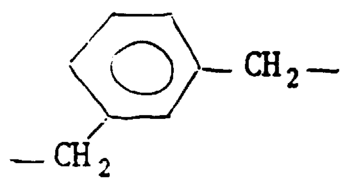 ,

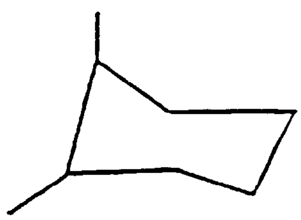 , 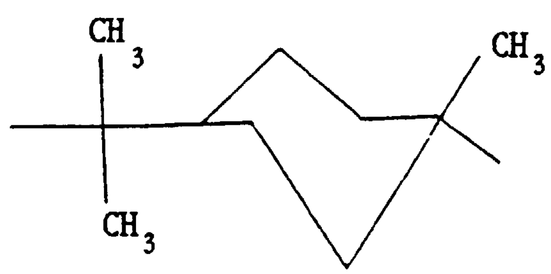

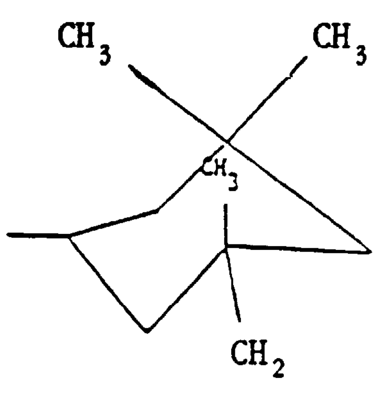 , 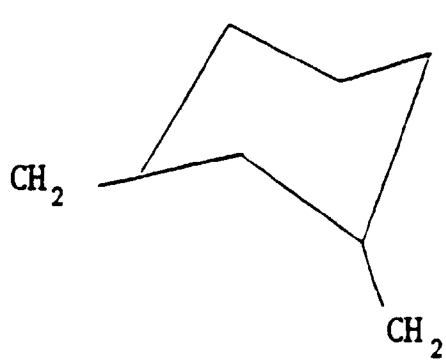

Un second objet de la présente invention consiste en un procédé de préparation des monomères de formule (I), comprenant la réaction d'au moins une diamine de formule $H_2$ N - R - $NH_2$ (dans laquelle R est comme défini précédemment) avec au moins une résine poly-époxidée et avec au moins un époxyde (méth)acrylique de formule

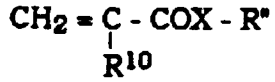

dans laquelle $R^{10}$ et X sont comme définis précédemment et R" est une chaine hydrocarbonée de 2 à 20 atomes de carbone comprenant un groupe oxiranne dans la chaine ou en bout de chaine, choisie parmi les chaînes alkyles linéaires ou ramifiées, cycloalkyles ou hétérocycloalkyles mono- ou polycycliques et alkylaryles.

Comme exemples de diamines utilisables dans le procédé selon l'invention on peut citer notamment le diaminodiphénylméthane, le 3, 3', 5, 5' tétra-méthyl - 4, 4' - diaminodiphénylméthane,, le 4, 4' di-aminodiphényl éther, la 4, 4' diaminodiphénylsulfone, le 4, 4' diaminodicyclohexylméthane, la propylisophorone diamine, le diamine paramenthane, le 1,2 diaminocyclohexane et la 1,3-cyclohexane-bis-méthylamine.

Par résine polyépoxidée au sens de la présente invention, on entend une molécule possédant au moins deux fonctions époxydes. Ces résines sont plus particulièrement des résines diépoxydées comme, par exemple, l'éther diglycidylique du bisphénol A, le diépoxyde de butadiène, le 3,4-époxycyclohexane-carboxylate de 3,4-époxycyclohexylméthyle, le dioxyde de vinyl-cyclohexène, le 4, 4' -di (1,2-époxyéthyl) diphényléther, le 4, 4' - (1,2-époxyéthyl)-biphényle, le 2,2-bis (3,4-époxycyclohexyl) propane, l'éther diglycidylique du résorcinol l'éther diglycidylique du phloroglucinol, le bis (2,3 -époxycyclopentyl) éther, le 2- (3,4-époxy) cyclohexane-5,5-spiro (3,4-époxy)-cyclohexane-m-dioxane, l'adipate de bis- (3,4-époxy-6-méthylcyclohexyle), le N, N-m (phénylènebis 4,5-époxy-1,2-cyclohexanedicarboxamide), un composé diépoxy contenant un cycle hydantoïne, etc. De telles résines peuvent généralement être représentées par la formule

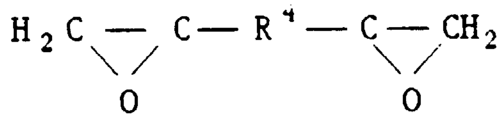

(II)

dans laquelle $R^4$ a la même signification que dans la formule (I).

Pour la mise en oeuvre du procédé selon l'invention, on peut aussi utiliser des résines triépoxydées ou tétraépoxydées comme, par exemple, l'éther triglycidique du p-aminophénol, les éthers polyarylglycidiques, le 1, 3, 5- tri (1,2-époxy) benzène, la 2, 2', 4, 4'-tétraglycidoxybenzophénone, le tétraglycidoxytétraphényléthane, l'éther polyglycidylique de la résine phénol-formaldéhyde de type novolaque, l'éther triglycidylique du glycérol, l'éther triglycidylique du triméthylolpropane et le tétraglycidyl-4, 4' - diaminodiphénylméthane.

Comme exemples d'époxydes (méth)acryliques utilisables dans le procédé selon l'invention, on peut citer notamment les acrylates et méthacrylates de glycidyle, de (norbornyloxy-2)-2 éthyle, de (diméthanodécahydronaphtyloxy-2) -2 éthyle, de 4,5-époxypentyle, de 5,6-époxyhexyle, de 6,7-époxyheptyle, de 7,8-époxyoctyle, de 8,9-époxynonyle, de 9,10-époxydécyle, de 11,12-époxydodécyle, de 2,3-époxybutyle, de 3-phényl, 2,3-époxypropyle, d'octahydro-2,5-méthano-2H-undéno [1,2-b] oxyrényle et d'hydroxy-5 (6) [époxy-2,1' éthyle] -2 bicyclo [2.2.1] heptane.

La réaction du procédé selon l'invention peut être effectuée soit en une seule étape par mise en présence simultanée de la diamine, de la résine polyépoxydée et de l'époxyde (méth)acrylique. Elle peut aussi être effectuée en deux étapes, en faisant réagir d'abord la diamine et la résine polyépoxydée, puis en mettant le produit de cette première réaction en présence de l'époxyde (méth)acrylique. Quelle que soit la méthode choisie, il est préférable que les proportions respectives de la résine polyépoxydée et de l'époxyde (méth)acrylique soient choisies de manière à rester en dessous du point de gel jusqu'en fin de réaction. Plus précisément d'après la relation de MACOSKO et MILLER (Macromolecules, 1976, vol.9, p.p. 199-211) liant le degré de conversion au point de gel à la fonctionnalité des espèces réactives dans le cas d'une réaction de polycondensation, il est préférable que la concentration molaire en époxyde (méth)acrylique C et la concentration molaire en résine polyépoxydée $C_1$ soient liées par l'inéquation :

$$C_1 (i^2 - \frac{4i}{3}) < \frac{C}{3}$$

i étant la fonctionnalité de la résine polyépoxydée, c'est-à-dire le nombre de fonctions époxydes par molécule.

Si plusieurs diamines sont mises en oeuvre simultanément dans le procédé selon l'invention, on obtiendra un mélange statistique de monomères de formule (I) comportant différents groupements divalents R.

Le procédé selon l'invention peut être mis en oeuvre soit en masse, c'est-à-dire en l'absence de solvant, à une température comprise entre 20°C et 100°C environ et plus particulièrement entre 25° et 50°C, soit en solution dans un solvant inerte à une température ne dépassant pas la température d'ébullition dudit solvant. Comme solvant inerte on peut choisir un hydrocarbure aromatique tel que toluène ou xylènes ou bien une cétone telle que l'acétone ou la méthyléthylcétone ou encore un éther tel que le tétrahydrofurane.

Le procédé selon l'invention peut également être mis en oeuvre en présence d'un composé organique éthyléniquement insaturé tel que :

- un nitrile insaturé tel que l'acrylonitrile ou le méthacrylonitrile,

- une maléimide N-substituée telle que la N-éthyl-maléimide, la N-isopropylmaléimide, la N-n-butyl-maléimide, la N-isobutylmaléimide, la N-terbutyl-maléimide, la N-n-octylmaléimide, la N-cyclohexyl-maléimide, la N-benzylmaléimide et la N-phényl-malméide,
- des oxazolidones acryliques et méthacryliques choisies parmi celles de formule :

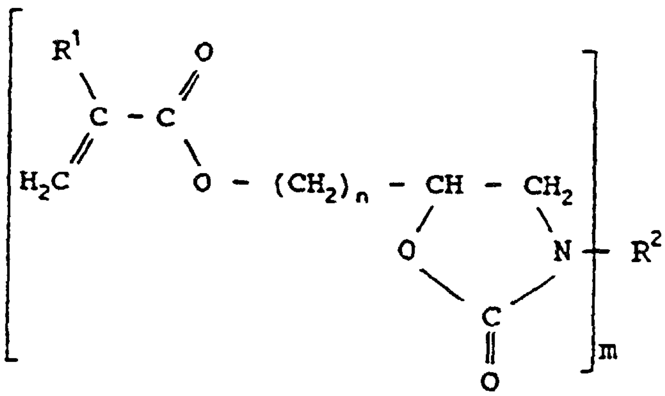

et celles de formule :

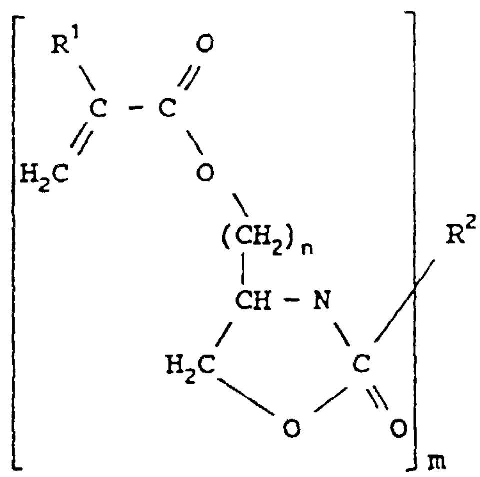

formules dans lesquelles :

- $R^1$ est choisi parmi l'atome d'hydrogène et le radical méthyle,
- n est un nombre entier allant de 1 à 12,
- m est un nombre entier allant de 1 à 3, et
- $R^2$ est un radical hydrocarboné, alkyle linéaire, ramifié ou cyclique ou bien aromatique possédant de 5 à 12 atomes de carbone,

- un hydrocarbure vinylaromatique tel que styrène, vinyltoluène, alphaméthylstyrène, chlorostyrènes, bétaméthylstyrène, paratertiobutylstyrène ou vinylnaphtalène,
- un ester d'alkyle de l'acide acrylique ou méthacrylique,
- unacrylate ou méthacrylate monocyclique (comme ceux de cyclohexyle ou de benzyle) ou bicyclique (comme ceux d'isobornyle),
- le phtalate de diallyle, ou
- un acrylate ou méthacrylate de polyol comme les diacrylates et diméthacrylates de l'éthylèneglycol, du propylèneglycol, du 1,3-butanediol, du 1,4-butanediol, du 1,6-hexane-diol, du néopentylglycol, du 1,4-cyclohexane-diol, du 1,4-cyclo-hexane-diméthanol, du 2,2,4-triméthyl-1,3-pentanediol, du 2-éthyl-2-méthyl-1,3-propanediol, du 2,2-diéthyl-1,3-propanediol, du diéthylèneglycol, du dipropylèneglycol, du triéthylèneglycol, du tripropylèneglycol, du tétraéthylène-glycol, du tétrapropylèneglycol, du triméthyloléthane, du triméthylolpropane, du glycérol, du pentaérylthritol, les triacrylates et triméthacrylates du triméthyloléthane, du triméthylolpropane, du glycérol, du pentaérythritol, les tétraacrylates et tétraméthacrylates du pentaérythritol, les di (méth)acrylates à hexa (méth)acrylates du dipentaérythritol, les poly (méth)acrylates de polyols mono- ou polyéthoxylés ou mono- ou polypropoxylés tels que le triacrylate et le triméthacrylate du triméthylolpropane triéthoxylé, du triméthylolpropane tripropoxylé, le

triacrylate et le triméthacrylate du glycérol tripropoxylé, le triacrylate, le triméthacrylate, le tétraacrylate, le tétraméthacrylate du pentaérythritol tétraéthoxylé et le méthacrylate de caprolactone.

La plupart des systèmes de réactifs et des produits formés sont en effet solubles dans de tels composés organiques éthyléniquement insaturés.

Le procédé selon l'invention peut être mis en oeuvre sans catalyseur ou bien en présence d'une quantité efficace d'au moins un catalyseur choisi de préférence parmi les acides de Lewis. Comme exemples de catalyseurs utilisables on peut citer des amines tertiaires, l'éthérate de trifluorure de bore, l'ester méthylique de l'acide paratoluènesulfonique.

Enfin, un troisième objet de la présente invention consiste en l'application des nouveaux composés multiacryliques azotés décrits précédemment à la constitution de nouveaux polymères et copolymères.

Plus précisément la présente invention concerne des polymères et copolymères comprenant au moins un motif dérivé d'au moins un composé multiacrylique azoté de formule (I). De tels (co)polymères peuvent en outre comprendre au moins un motif dérivé d'au moins un comonomère copolymérisable avec ledit composé multiacrylique azoté de formule (I), tel que par exemple un composé organique éthyléniquement insaturé décrit précédemment en tant que solvant pour la synthèse du composé de formule (I).

De tels polymères et copolymères sont obtenus en (co)polymérisant au moins un composé multiacrylique azoté selon l'invention et le cas échéant au moins un comonomère copolymérisable, tel que défini précédemment en présence d'au moins un initiateur de radicaux libres tel qu'un peroxyde, un hydroperoxyde ou un composé diazo. La (co) polymérisation est généralement effectuée à une température comprise entre 50°C et 120°C environ et en utilisant l'un des monomères comme solvant

Les compositions de composé multiacrylique azoté et de comonomère peuvent également être réticulées sous l'action d'un rayonnement X ou ultraviolet Dans ce dernier cas, on aura recours à des photo-initiateurs tels que la benzoïne ou ses dérivés, ou à des photosensibilisateurs tels que la benzophénone, le triéthylaminoéthanol ou la benzophénone triéthylamine. Les polymérisations s'effectuent à température ambiante. Les temps d'exposition varient de quelques secondes à quelques minutes.

Une autre solution consiste à polymériser ces compositions sous l'action d'un faisceau d'électrons accélérés d'énergie comprise entre 0,2 et 10 mega eV environ. Le principal intérêt de ce procédé tient à l'extrême vitesse de polymérisation des formulations traitées. L'irradiation s'effectue à température et sous atmosphère ambiante. Dans certains cas, le recours à une atmosphère inerte améliorera l'état de surface des polymères obtenus Dans certains cas, un post-traitement thermique pourra être appliqué à des températures comprises entre 100 et 200°C, et d'une durée de quelques minutes à quelques dizaines de minutes selon les techniques utilisées (étuve, infrarouge micro-ondes...). Un autre avantage de l'utilisation des électrons accélérés tient à la bonne pénétration de ceux-ci dans le milieu à durcir, ce qui en fait une solution préférable au rayonnement ultraviolet pour la polymérisation de pièces en matériaux composites. Le faible coût énergétique dû à ce type de procédé sera également un atout

De tels polymères et copolymères allient une grande aptitude à la réticulation conduisant à des polymères tridimensionnels fortement réticulés infusibles et insolubles et de bonnes performances thermiques. Il s'ensuit que ces produits peuvent être avantageusement utilisés, entre autres, dans certaines formulations destinées à l'élaboration de vernis, d'adhésifs de films, de matériaux composites et autres.

Les exemples suivants sont fournis à titre illustratif et nullement limitatifs de la présente invention

Exemple 1

On réalise en masse la condensation à 40°C d'un mélange comprenant pour 1 mole de diglycidyl éther du bisphénol A, 6 moles de méthacrylate de glycidyle et 2 moles de 3, 3' diméthyl-4, 4'-diaminodicyclohexyl méthane. Au bout de 15 heures de réaction, le degré de conversion des fonctions époxy déterminé par chromatographie par exclusion de taille est de 88%. L'interprétation du chromatogramme et la distribution des masses molaires montrent la formation d'un mélange des produits suivants:

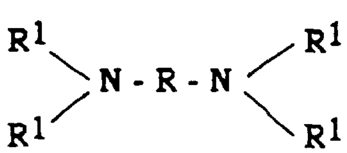

,

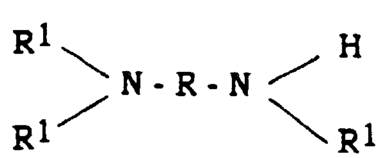

et

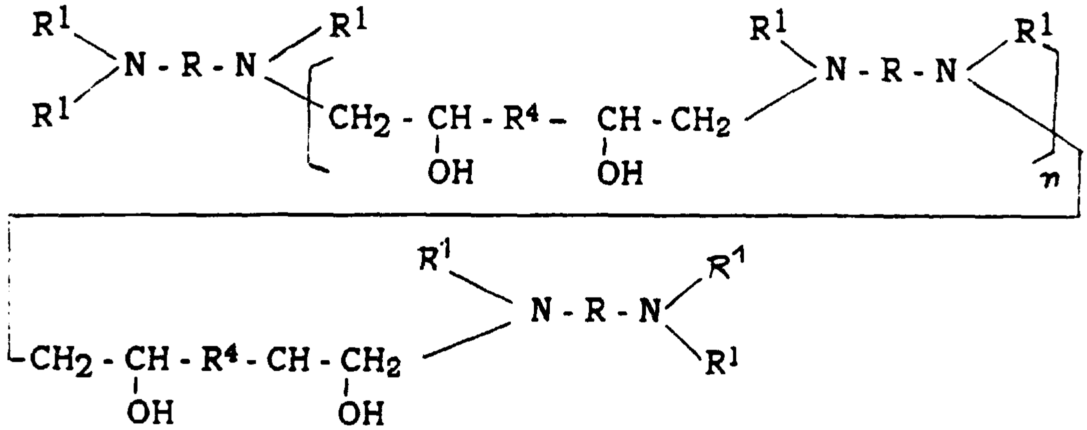

dans lesquels

$R^1$ = 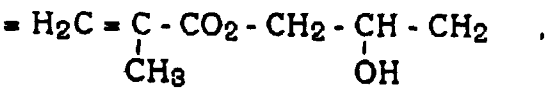 ,

n = 0, 1 ou 2,

R = 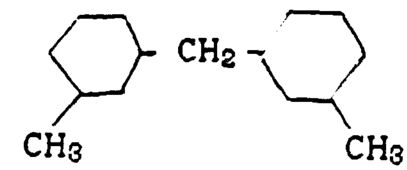

et

$R^4$ = 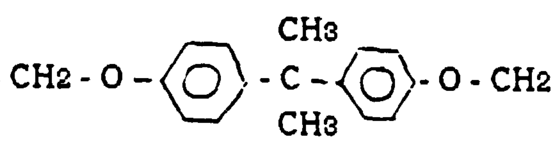

Exemple 2

On réalise la condensation d'un mélange identique à celui de l'exemple 1 en solution à 40 % en poids dans le styrène et à la température de 40°C pendant 30 heures. On ajoute ensuite 1,5 partie en poids de perbenzoate de tertiobutyle pour 100 parties de mélange de l'exemple 1 et de styrène et on laisse la copolymérisation se poursuivre pendant 1 heure à 120°C. La réaction, très exothermique, est étudiée par microcalorimétrie différentielle et fait apparaître un pic exothermique à 126°C. Le réseau formé est ensuite étudié par analyse mécanique dynamique et fait apparaître une température de transition vitreuse de 189°C. Les essais de traction ont fait apparaître les propriétés suivantes :

| | |
|---|---|
| contrainte à la rupture : | 42 MPa |
| allongement à la rupture : | 2 % |

Exemple 3 (comparatif)

On réalise en masse la condensation puis la polymérisation radicalaire d'un mélange comprenant 4 moles de méthacrylate de glycidyle et mole de 3,3'-diméthyl-4,4'- diaminodicyclohexyl-méthane en présence de 1,5 % en poids de perbenzoate de tertiobutyle, selon le programme de température suivant: 3 heures à 50°C puis 3 heures à 120°C

et 3 heures à 180°C en étuve. Un essai d'analyse mécanique dynamique en torsion à 1 Hz, de 25°C à 250°C à 2°C/min (déformation imposée : 0,1 %) montre que l'on obtient un réseau très fragile. En effet les échantillons se brisent pendant l'essai avant d'atteindre la température de transition vitreuse.

Exemple 4

On réalise en masse la condensation puis la polymérisation radicalaire d'un mélange comprenant 1 mole de diglycidyléther du bisphénol A, 6 moles de méthacrylate de glycidyle et 1 mole de 3,3'-diméthyl-4,4' diaminodicyclohexyl méthane en présence de 1,5 % en poids de perbenzoate de tertiobutyle selon le programme de température suivant: 3 heures à 50°C puis 3 heures à 120°C et 3 heures à 180°C en étuve. L'analyse mécanique dynamique en torsion analogue à l'exemple 3, montre que l'on obtient un réseau homogène non fragile. L'échantillon ne casse pas et on obtient une température de transition vitreuse de 175°C.

Exemple 5 (comparatif)

On réalise la condensation à 40°C d'un mélange comprenant 4moles de méthacrylate de glycidyle et 1 mole de 3,3'-diméthyl-4, 4'-diaminodicyclohexylméthane en solution à 40 % en poids dans le styrène. Au bout de 67 heures de réaction, le degré de conversion des fonctions époxy déterminé par chromatographie par exclusion de taille est de 89 %. Le produit obtenu est ensuite polymérisé pendant une heure à 120°C en présence de 1,5 partie en poids de perbenzoate de tertiobutyle pour 100 parties du mélange total L'étude de la réaction par microcalorimétrie différentielle fait apparaître un pic exothermique à 122°C. Le réseau formé présente une température de transition vitreuse de 200°C.

## Revendications

**1.** Monomères multiacryliques azotés de formule

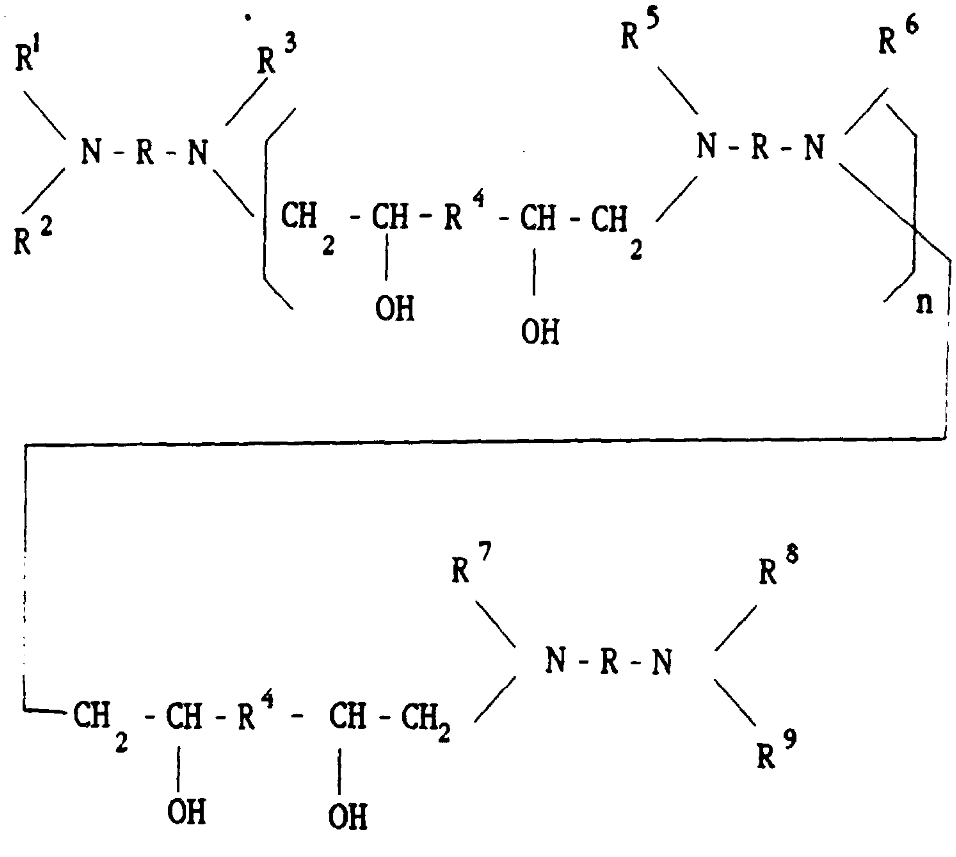

(I)

dans laquelle :

- n est un nombre entier au moins égal à 0,
- $R^1$, $R^2$, $R^3$, $R^5$, $R^6$, $R^7$, $R^8$ et $R^9$ sont chacun choisis indépendamment parmi l'atome d'hydrogène et les groupements acryliques ou méthacryliques de formule

$$CH_2 = \underset{R^{10}}{\underset{|}{C}} - COX - R' -,$$

$R^{10}$ étant choisi parmi l'atome d'hydrogène et le radical méthyle, X étant choisi parmi les atomes de soufre et d'oxygène et R' étant une chaine hydrocarbonnée de 2 à 20 atomes de carbone comprenant un groupe hydroxyle dans la chaîne ou en bout de chaine, choisie parmi les chaînes alkyles linéaires ou ramifiées, cycloalkyles ou hétérocycloalkyles mono- ou polycycliques et alkylaryles.

- $R^4$ est un groupement de formule $- CH_2 - O - R^{11} - O - CH_2$ dans laquelle $R^{11}$ est un groupement divalent choisi par mi les groupements alkyline ayant de 2 à 12 atomes de carbone et ceux comprenant au moins un cycle aliphatique ou aromatique substitué ou non, et
- R est un groupement divalent comprenant au moins un cycle aliphatique ou aromatique substitué ou non,

avec la condition que :

- lorsque n est égal à 0, au moins deux des groupements $R^1$, $R^2$, $R^3$, $R^7$, $R^8$ et $R^9$ sont des groupements acryliques ou méthacryliques, et
- lorsque n est plus grand que 0, au moins deux des groupements $R^1$, $R^2$, $R^8$, $R^5$, $R^6$, $R^7$, $R^8$ et $R^9$ sont des groupements acryliques ou métacryliques.

2. Monoméres multiacryliques azotés selon la revendication 1, caractérisés en ce que le le groupement R et/ou le groupement $R^{11}$ contiennent deux cycles aliphatiques ou aromatiques articulés et sont de la forme $R^{12} - R^{13} - R^{12}$ où $R^{12}$ représente un radical cyclique ou aromatique comprenant de préférence 5 à 10 atomes de carbone substitués ou non par des groupements aliphatiques ou des hétéroatomes, et $R^{13}$ représente un radical qui peut être, soit un atome d'oxygène, soit un groupe d'atomes comportant des atomes de carbone, d'hydrogène, d'oxygène et/ou de soufre, permettant de relier les cycles décrits pour $R^{12}$ par des motifs alkylènes ou des liaisons éthers ou sulfones.

3. Procédé de préparation d'un monomère multiacrylique azoté selon la revendication 1, comprenant la réaction d'au moins,une diamine de formule $H_2 N - R - NH_2$ avec au moins une résine polyépoxydée et avec au moins un époxyde (méth)acrylique, de formule

$$CH_2 = \underset{R^{10}}{\underset{|}{C}} - COX - R''$$

dans laquelle $R^{10}$ et X sont comme définis à la revendication 1 et R" est une chaine hydrocarbonée de 2 à 20 atomes de carbone comprenant un groupe oxiranne dans la chaine ou en bout de chaine, choisie parmi les chaines alkyles linéaires ou ramifiées, cycloalkyles ou hétérocycloalkyles mono- ou polycycliques et alkylaryles.

4. Procédé de préparation selon la revendicatiop 3, caractérisé en ce que les proportions respectives de la résine polyépoxydée et de l'époxyde (méth)acrylique sont choisies de manière à rester en dessous du point de gel jusqu'en fin de réaction.

5. Procédé de préparation selon l'une des revendications 3 et 4, caractérisé en ce que la concentration molaire en époxyde (méth)acrylique C et la concentration molaire en résine polyépoxydée $C_1$ soient liées par l'inéquation :

$$C_1 (i^2 - \frac{4i}{3}) < \frac{C}{3}$$

i étant la fonctionnalité de la résine polyépoxydée.

6. Procédé de préparation selon l'une des revendications 3 à 5, caractérisé en ce qu'il est mis en oeuvre en masse à une température comprise entre 20°C et 100°C.

7. Procédé de préparation selon l'une des revendications 3 à 5, caractérisé en ce qu'il est mis en oeuvre en présence d'un solvant inerte.

8. Procédé de préparation selon l'une des revendications 3 à 7, caractérisé en ce qu'il est mis en oeuvre en présence

d'une quantité efficace d'au moins un catalyseur acide de Lewis.

**9.** Procédé de préparation selon l'une des revendications 3 à 8, caractérisé en ce que la résine polyépoxydée est le diglycidyl ether du bisphénol A.

**10.** Polymères et copolymères comprenant au moins un motif dérivé d'au moins un composé multiacrylique azoté selon la revendication 1.

## Patentansprüche

**1.** Nitrierte Multiacrylmonomere folgender Formel:

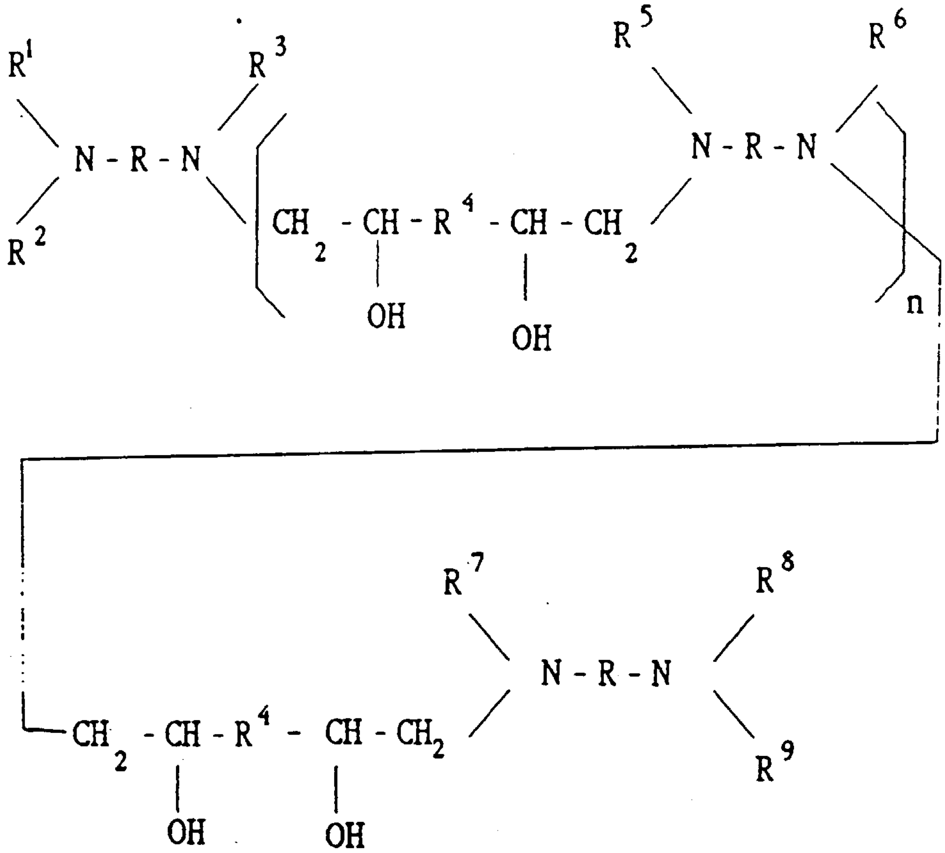

(I)

in dieser:

- stellt n eine Ganzzahl von mindestens gleich 0 dar,
- R1, R2, R3, R5, R6, R7, R8 und R9 werden unabhängig voneinander ausgewählt aus dem Wasserstoffatom sowie den Acryl- und Methacrylgruppen der Formel

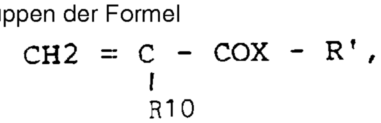

  R10 wird ausgewählt aus dem Wasserstoffatom sowie dem Methylradikal. X stammt aus den Schwefel- und Sauerstoffatomen und R' stellt eine Kohlenwasserstoffkette von 2 bis 20 Kohlenstoffatomen dar, bestehend aus einer Hydroxylgruppe innerhalb der Kette bzw. am Ende derselben, ausgewählt aus den linearen oder verzweigten Alkylketten oder auch Zykloalkyl- bzw. Heterozykloalkyl mono- oder polyzyklischen und Alkylarylketten.
- R4 ist eine Verzweigung der Formel - CH2 - 0 - R11 - 0 - CH2, innerhalb derer R11 eine divalente Gruppe darstellt, ausgewählt aus den Alkylgruppen mit 2 bis 12 Kohlenstoffatomen die wiederum mindestens einen aliphatischen Zyklus oder einen substituierten bzw. nicht substituierten aromatischen Zyklus enthalten und
- R als eine divalente Gruppe, bestehend aus mindestens einem aliphatischen oder substituierten oder nicht

substituierten aromatischen Zyklus,

unter der Bedingung, daß:

- falls n gleich 0 ist, mindestens zwei der Gruppen R1, R2, R3, R7, R8 und R9 aus Acryl- oder Methacrylgruppen bestehen und
- sobald n größer als 0 ist, mindestens zwei der Gruppen R1, R2, R3, R5, R6, R7, R8 und R9 aus Acryl- bzw. Methacrylgruppen bestehen.

2. Nitrierte Multiacrylmonomere gem. Patentanspruch 1, charakterisiert dadurch, daß die Gruppe R und/oder R11 zwei aliphatische oder artikulierte aromatische Zyklen enthalten gem. Gruppierung R12 - R13 - R12, wobei R12 ein zyklisches oder aromatisches Radikal darstellt mit vorzusweise 5 bis 10 substituierten oder nicht substituierten Kohlenstoffatomen aus den aliphatischen oder Heteroatomgruppen. R10 stellt ein Radikal dar, das entweder aus einem Sauerstoffatom oder aus einer Gruppe mit Atomen aus Kohlenstoff, Wasserstoff, Sauerstoff und/oder Schwefel besteht, die eine Verbindung der für R12 beschriebenen Zyklen erlauben, und zwar durch Einbindung von Alkylen- oder Äther- bzw. Sulfondecken.

3. Rezepturverfahren eines nitrierten Multiacrylmonomers gem. Patentanspruch 1, ausgehend von der Reaktion mindestens eines Diamins der Formel H2 N - R - NH2 mit mindestens einem Polyepoxydharz und mindestens einem (Meth)acrylepoxid der Formel

$$CH_2{=}\underset{\substack{|\\ R^{10}}}{C}{-}COX{-}R'',$$

innerhalb derer $R^{10}$ und X wie in Patentanspruch 1 definiert sind und R" stellt eine Kohlenwasserstoffkette von 2 bis 20 Kohlenstoffatomen dar, bestehend aus einer Oxirangruppe innerhalb der Kette bzw. am Ende derselben, ausgewählt aus den linearen oder verzweigten Alkylketten oder auch Zykloalkyl- bzw. Heterozykloalkyl mono- oder polyzyklischen und Alkylarylketten.

4. Rezepturverfahren gem. Patentanspruch 3, charakterisiert dadurch, daß die jeweiligen Anteile an Polyepoxydharz und (Meth)acrylepoxyd so ausgewählt werden, daß man unterhalb des Erstarrungspunktes bis zum Reaktionsende bleibt.

5. Rezepturverfahren gem. einer der Patentansprüche 3 und 4, charakterisiert dadurch, daß die Molarkonzentration an (Meth)acryl-epoxyd C sowie die Molarkonzentration an Polyepoxydharz C1 gebunden werden durch die Ungleichung:

$$C1(i2-\frac{4i}{3}) < \frac{C}{3}$$

i stellt die Funktionalität des Polyepoxydharzes dar.

6. Rezepturverfahren gem. einem der Patentansprüche 3 bis 5, charakterisiert dadurch, daß die Herstellung in der Masse bei einer Temperatur zwischen 20°C und 100°C erfolgt.

7. Rezepturverfahren gem. einem der Patentansprüche 3 bis 5, charakterisiert dadurch, daß die Herstellung mit einem Inert-Streckmittel erfolgt.

8. Rezepturverfahren gem. einem der Patentansprüche 3 bis 7, charakterisiert dadurch, daß die Herstellung mit einer Wirkmenge von mindestens einem Lewis-Säure-Katalysator erfolgt.

9. Rezepturverfahren gem. einem der Patentansprüche 3 bis 8, charakterisiert dadurch, daß Bisphenol A-Diglycidyläther als Polyepoxydharz verwendet wird.

10. Polymere und Copolymere, die mindestens eine Derivatkette einer nitrierten Multiacrylzusammensetzung gem. Patentanspruch 1 aufweisen.

## Claims

1. Nitrogeneous multiacrylic compounds having the formula :

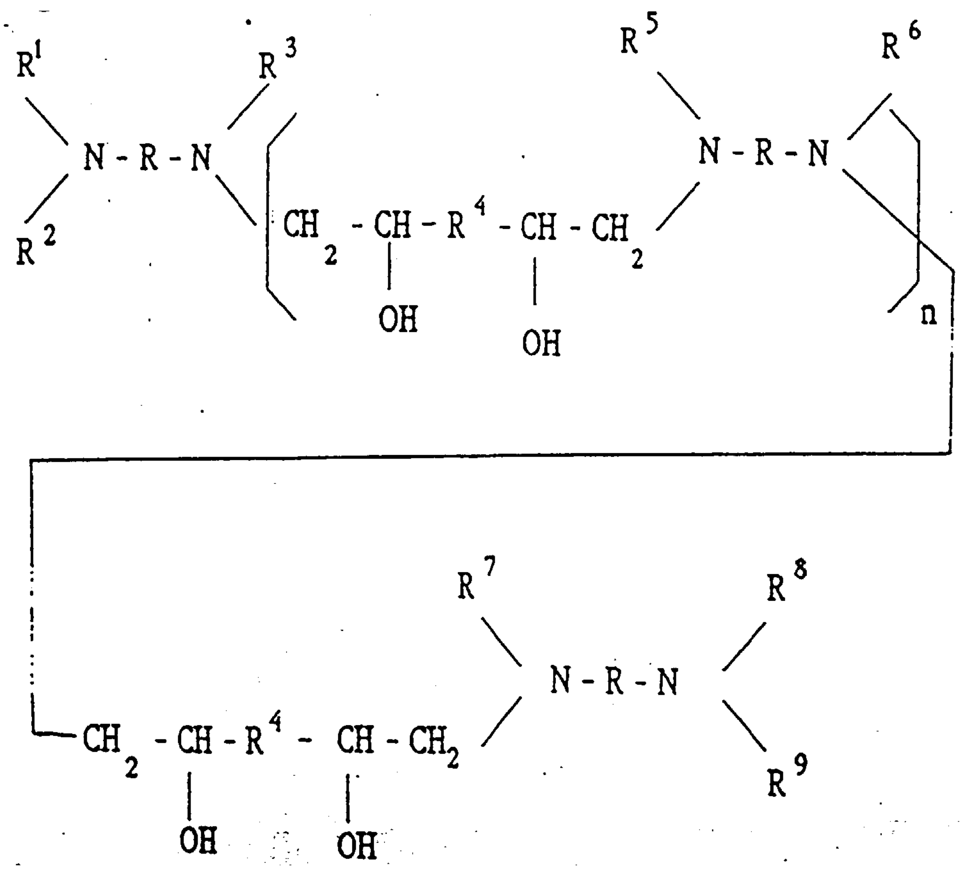

(I)

wherein :

- n is an integer at least equal to 0,
- $R_1$, $R_2$, $R_3$, $R_5$, $R_6$, $R_7$, $R_8$ and $R_9$ are selected, independantly from each other, from a hydrogen atom and acrylic or methacrylic groups having the formula

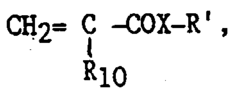

  $R_{10}$ being selected from a hydrogen atom and a methyl group, X being selected from the sulfur and oxygen atoms and R' being a hydrocarbon group of 2 to 20 carbon atoms comprising a hydroxyl group within the backbone or at the end of the chain, selected from linear or branched alkyl groups, monocyclic or polycyclic cycloalkyl or heterocycloalkyl groups and alkylaryl groups,
- $R_4$ is a group having the formula $-CH_2-O-R_{11}-O-CH_2-$ wherein $R_{11}$ is a bivalent group selected from alkylene groups having from 2 to 12 carbon atoms and those comprising at least a substituted or non-substituted aliphatic or aromatic ring, and
- R is a bivalent group comprising at least one substituted or non-substituted aliphatic or aromatic ring,

with the proviso that :

- when n is 0, at least two of the groups $R_1$, $R_2$, $R_3$, $R_7$, $R_8$ and $R_9$ are acrylic or methacrylic groups, and
- when n is greater than 0, at least 2 of the groups $R_1$, $R_2$, $R_3$, $R_5$, $R_6$, $R_7$ $R_8$ and $R_9$ are acrylic or methacrylic groups.

**2.** Nitrogeneous multiacrylic compounds according to claim 1, characterized in that group R and/or group $R_{11}$ contain two jointed aliphatic or aromatic rings and are in the form of $R_{12}$-$R_{13}$-$R_{12}$ where $R_{12}$ represents a cyclic or aromatic group preferably comprising from 5 to 10 carbon atoms substituted or unsubstituted by aliphatic groups or by heteroatoms and where $R_{13}$ represents a group which may be either an oxygen atom or a group of atoms comprising carbon, hydrogen, oxygen and/or sulfur atoms, capable of linking the $R_{12}$ cycles by means of alkylene groups or ether or sulfone linkages.

3. Process for preparing a nitrogeneous multiacrylic compound according to claim 1, comprising the reaction of at least a diamine of the formula $H_2$-R-$NH_2$ with at least a polyepoxidic resin and with at least a (meth)acrylic epoxide having the formula

$$CH_2{=}\underset{\displaystyle R^{10}}{\underset{|}{C}}{-}COX{-}R'',$$

wherein $R^{10}$ and X are as defined in Claim 1 and R'' is a hydrocarbon group of 2 to 20 carbon atoms comprising an oxirane group within the backbone or at the end of the chain, selected from linear or branched alkyl groups, monocyclic or polycyclic cycloalkyl or heterocycloalkyl groups and alkylaryl groups.

4. Process according to claim 3, characterized in that the respective proportions of the polyepoxidic resin and the (meth)acrylic epoxide are selected in order to remain under the gel point until the end of the reaction.

5. Process according to one of claims 3 and 4, characterized in that the molar concentration of the polyepoxidic resin $C_1$ and the molar concentration of the (meth)acrylic epoxide C are linked by the inequation :

$$C_1\ (i^2 - \frac{4i}{3}) < \frac{C}{3}$$

i being the functionality of the polyepoxidic resin .

6. Process according to one of claims 3 to 5, characterized it is carried out in bulk at a temperature between 20°C and 100°C.

7. Process according to one of claims 3 to 5, characterized in that it is carried out in the presence of an inert solvent.

8. Process according to one of claims 3 to 7, characterized in that it is carried out in the presence of an effective amount of at least a Lewis acid catalyst.

9. Process according to one of claims 3 to 8, characterized in that the polyepoxidic resin is bisphenol A diglycidylether.

10. Polymers and coplymers comprising at least a unit derived from at least a nitrogeneous multiacrylic compound according to claim 1.